# FASCICULE DE BREVET EUROPEEN

(11) **EP 0 499 570 B1**
(45) Date de publication et mention de la délivrance du brevet: **19.07.1995**
(21) Numéro de dépôt: 92500012.7
(22) Date de dépôt: 07.02.1992
(51) Int. Cl.: A47J 27/14, A47J 43/042

(54) **Dispositif pour la coction de nourritures**
Kochvorrichtung für Nahrungsmittel
Cooking device for foodstuffs

(30) Priorité: 14.02.1991 ES 9100390; 17.06.1991 ES 9101448; 24.10.1991 ES 9102364
(43) Date de publication de la demande: 19.08.1992
(73) Titulaire: SALBURUA 91, S.L, Elorriaga-Vitoria (ES)
(72) Inventeur: Sagasta Aguirre, José, E-01004 Vitoria (ES)
(74) Mandataire: Urizar Anasagasti, Jesus Maria

(56) Documents cités:
- EP-A- 0 419 144
- GB-A- 984 972
- GB-A- 2 179 242
- US-A- 3 002 895
- US-A- 4 561 346
- US-A- 4 704 956

## Description

La présente invention, tel que son titre l'indique, porte sur un dispositif destiné à préparer des nourritures, lequel comprend des éléments de chauffage propres, ou emploie ceux d'une cuisinière conventionnelle, électrique ou de toute autre sorte, ayant la particularité qu'au-dessus de ces éléments de chauffage il est équipé d'un support du récipient de cuisine animé par un mouvement de va-et-vient, lequel, en se transmettant au récipient, empêche que les nourritures n'attachent.

On connaît bien le fait que la meilleure façon d'éviter que toute nourriture n'attache lorsqu'on procède à sa préparation, consiste à remuer de façon continue le récipient. Certains plats spécifiques, tels que la morue, exigent un mouvement continuel permettant d'extraire la gelée du produit, laquelle, en se mêlant à l'huile, donne lieu à une sauce spécifique.

La présente invention cherche à obtenir un appareil électroménager pour cuisiner une large gamme de nourritures, pouvant employer également une grande diversité de récipients de cuisine très différents quant aux dimensions et configuration. Elle embrasse aussi un appareil industriel destiné à la coction de nourritures dans des restaurants ou, même, dans un domaine d'application plus restreint, pouvant constituer, de lui-même, une cuisinière portative telle que celles utilisées, par exemple, pour le camping ou le pic-nic, etc. Le terme "coction" est employé dans la présente description aussi bien que dans les revendications, pour faire allusion, en général, à l'application de la chaleur aux denrées alimentaires, comprenant, entre autres, celle de chauffer des liquides ou solides de différentes viscosités ou, même, pour griller au sec des denrées alimentaires en vrac. Dans toutes les parties où l'on fera allusion au terme cuisiner, il faudra donner pour acquis qu'on peut également appliquer ou chauffer des denrées alimentaires précuisinées.

Les brévets d'invention ci-dessous mentionnées sont censées représentatives de la technique déjà connue en ce qui concerne cette sorte d'outils:

Le brévet d'invention espagnole 8901378 porte sur un appareil électroménager à cuisiner des nourritures qui comporte un récipient spécifique animé par un mouvement de va-et-vient quant à un même plan vertical; pour cela faire, le fond dudit récipient présente une forme concave. De préférence, cet outil est utilisé pour griller des grains, c'est pour quoi il comporte, en outre, dans son intérieur un élément agitateur, constitué d'une grille fixe sur laquelle bute le produit en se mouvant le récipient.

Le brévet espagnol 487.487, avec priorité de la française 7901165 porte également sur un dispositif de coction à balancement dans lequel il existe aussi un mouvement suivant un plan vertical d'un récipient non pas conventionnel, avec la prticularité que le fond de ce récipient présente une configuration convexe à partir de son intérieur.

Le brévet européenn 90310070 porte sur un outil servant à préparer des nourritures et qui comprend aussi un récipient en forme spécifique, lequel est animé par un mouvement de rotation en vertu de certains moyens mécaniques qui transmettent le mouvement à un axe médian situé dans la partie inférieure. La totalité du récipient contenant la denrée alimentaire est à introduire dans un autre récipient contenant des moyens de chauffage et de récirculation d'air.

Le brévet USA 4301717 porte également sur un récipient muni d'un mouvement de rotation suivant un axe.

Le brevet USA 4.561.346 révèle un mécanisme d'oscillation et de vibration d'un récipient de cuisinière au moyen d'une belle connectée à un disque tournant, qui repose sur des supports, qui appuient sur un plan dénivelé de l'horizontale. L'inconvénient de ce mécanisme c'est qu'il est encombrant et qu'il est impossible de le placer sur une cuisinière conventionnelle en utilisant les moyens de chauffage dont elle dispose, puisque c'est précisément sous le disque tournant que se trouve l'ensemble du mécanisme d'actionnement.

Le dispositif de la présente invention effectue un mouvement de va-et-vient suivant un plan horizontal, lequel, en combinaison avec un mouvement de rotation simlutané, simule parfaitement le mouvement que l'on ferait manuellement en agitant un récipient de cuisine lorsqu'on le prend à la main, car, de cette façon, on effectue en général un petit nouvement giratoire sur un point fictif situé au centre de la main en position de repos, tout en s'effectuant aussi un mouvement de va-et-vient du produit contenu dans le récipient, car on saisit le récipient des deux mains. Par conséquent, on ne pratique aucun mouvement de balancement suivant un plan vertical, ce qui occasionnerait l'expulsion du produit à préparer hors du récipient. Egalement, aucune rotation n'a lieu à partir d'un axe médian en même temps que le récipient, ce qui occasionnerait aussi, à cause de la force centrifuge, l'expulsion du produit hors de celui-à.

En principe, avec ce dispositif, on a prévu la réalisation de deux appareils coïncidant essentiellement quant au mouvement qu'ils impriment au récipient de cuisine, l'un d'eux étant portatif et ne comprenant pas de moyens propres de chauffage et, lequel, par conséquent, peut être placé sur toute cuisinière conventionnelle; une variante de réalisation est celle constituée par un outil présentant des moyens de chauffage propres, constitués généralement de résistances, auquel cas celui-ci pourrait être remplacé par une cuisinière conventionnelle, tant à l'utilisation ménagère que qu'à celle de restauration.

Dans ces hypothèses, il existe un châssis qui est équipé d'une série de pièces excentriques, dont l'axe vient en appui et tourne librement autour de lui-même: ces pièces sont équipées sur leur dessus d'un point d'accouplement à un support du récipient, décentré par rapport à cet axe de telle sorte, qu'en imprimant au moins sur l'une d'elles un mouvement de rotation, le support du récipient décrit un mouvement de translation sur une trajectoire circulaire, de façon à ce que tous ses points se déplacent dans le même sens et à la même vitesse, sans occasionner ainsi la possible expulsion de son contenu.

On peut mieux comprendre l'objet de la présente invention à l'aide de la description suivante, réalisée à partir d'un exemple pratique d'un dispositif fabriqué conformément à l'invention; cette description est réalisée à l'aide des plans annexes, dans lesquels:
la figure 1 montre une vue de dessus d'un dispositif pour la coction de nourritures réalisé conformément à l'invention.
La figure 2 porte sur la coupe trasversale indiquée dans la figure précédente.
La figure 3 montre une vue en perspective d'une réalisation alternative dudit dispositif.

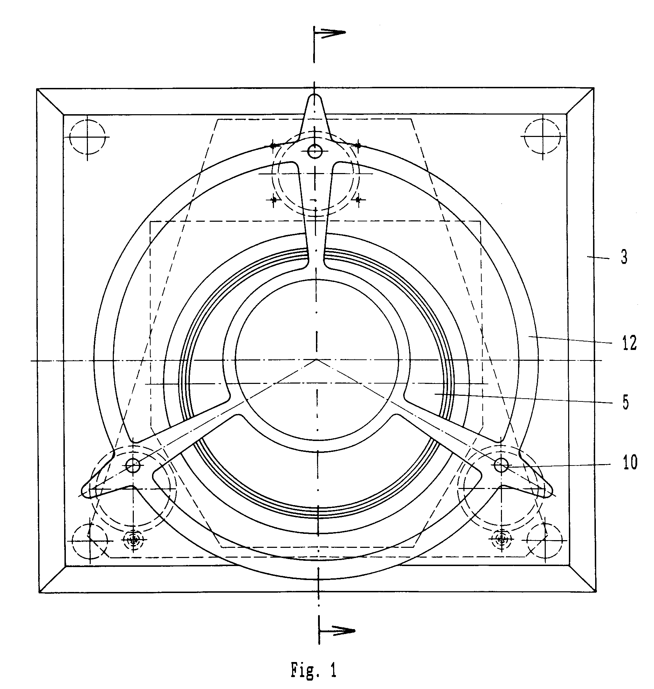

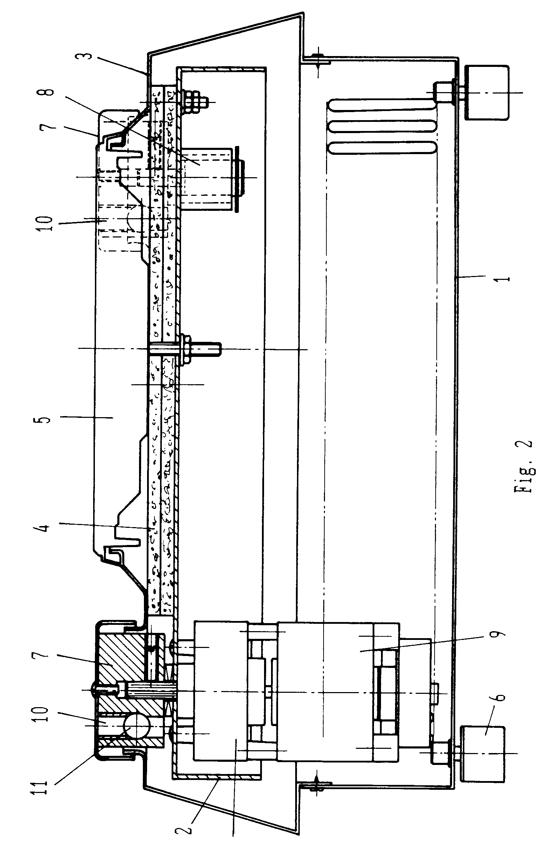

En faisant, d'abord, référence aux figures 1 et 2, on peut bien voir un appareil qui comprend une plaque support (2) en forme de boite renversée, comportant dans son extérieur des moyens d'isolant thermique (4) installés entre cette plaque (2), et une résistance électrique de chauffage placée en dessous de la plaque de dessus (5).

Par-dessus la plaque (2) et dans l'intérieur, également, de la plaque de chauffage (5), il y a une plaque (3) façonnant la structure-même de l'appareil. Inférieurement, cette plaque (3) est solidaire d'une autre en forme de boîte, avec la référence (1) dans la figure, équipée de plusieurs coupes ou fenêtres d'aération pour l'ensemble. La base est équipée de pattes d'appui réglables (6).

D'aprés une importante caractéristique de la présente invention, cet appareil présente la péculiarité de disposer d'une série de pièces (7) constituant les points d'appui d'un support universel (12) d'un récipient de cuisine. Ces pièces (7) sont animées par un mouvement de rotation de telle sorte qu'en s'effectuant l'appui du support (12) sur un point excentrique, non pas coïncidant avec l'axe de pivotement, ce support et, par conséquent, le récipient fait un mouvement de translation conformément à une trajectoire circulaire, en forme équivalente à celle réalisée manuellement.

Les pièces excentriques (7) présentent une configuration en fonction d'une petite casserole, équipée d'un trou (10), déplacé latéralement; de son côté, le support (12) présente des pivots saillants par sa face inférieure, distribués régulièrement conformément aux respectives piéces excentriques, les pivots ddudit support s'encastrant dans les trous de celles-lâ. Dans le but de faciliter le mouvement relatif entre les deux corps, on place dans les trous (10) une boule (11) qui rend possible le déplacement mutuel entre les deux ainsi que leur rotation.

Les pièces excentriques (7) présentent un axe médian (8) qui monte sur ses correspondants roulements, lesquels sont assujettis à la plaque support (2), pivotant, par conséquent, librement hormis l'une d'elles, celle qui est représentée dans la marge gauche de la figure 2, qui reçoit la mise en mouvement d'un moteur avec réducteur de vitesse (9) placé inférieurement dans l'évidement destiné à l'héberger dans la carcasse.

Avec cette disposition, et en agitant la pièce (7) autour d'un axe médian, le point d'appui (10) du support (12) décrit un mouvement circulaire; ce mouvement se transmet à travers le support lui-même aux autres excentriques (7), le support se déplaçant alors selon un mouvement qui rivalise parfaitement avec celui réalisé par les mains de l'ouvrier lorsqu'il agite un récipient de cuisine, et que nous avons dénomme de translation suivant une trajectoire circulaire, car tous les points du récipient remuent à la même vitesse, suivant, tel qu'il a été précisé ci-dessus, une trajectoire circulaire.

Dans la figure, nous avons représenté un nombre de trois pièces excentriques régulièrement distribuées; en général, ce chiffre doit être, au moins, de deux et, préféremment, trois ou quatre, se révélant nécessaire, en tout cas, le fait que le support (12) présente un nombre de supports, régulièrement distribués, capables de s'introduire dans les trous respectifs (10) des pièces (7), pour que l'outil effectue le mouvement décrit.

Une variante de réalisation de ce dispositif serait celle que représente une cuisiniére courante, préféremment, du type de celles qui comportent une plaque de dessus dont la configuration est similaire à celle qui vient d'être décrite, avec la particularité qu'en guise d'escorte, au moins un des fourneaux, doit être placé par dessous ou latéralement, par rapport à la cuisiniére conventionnelle, et en position de recevoir la transmission du mouvement par un moyen quelconque.

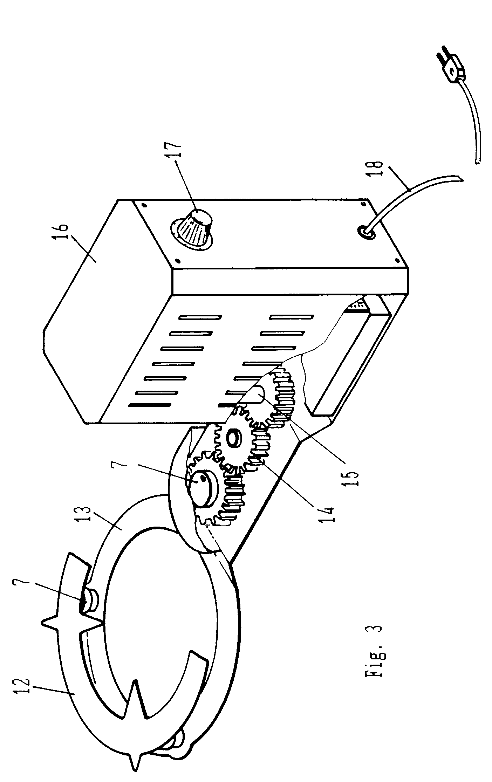

Une deuxième variante de réalisation est représentée dans la figure 3, dans laquelle on a prévu, dans ce cas, un dispositif capable dêtre monté sur une cuisiniére conventionnelle, mais qui comprendrait, dans ce cas, les moyens de commande propres pour effectuer le mouvement précédemment décrit. Dans ce cas, les pièces excentriques (7), et à leur tour, le support du récipient (12) sont montés sur un châssis (13) présentant une configuration annulaire, de telle sorte que l'on puisse le situer par-dessus de l'un des fourneaux d'une cuisiniére conventionnelle. Ce support (13) émerge latéralement dans un châssis support d'un moteur d'entrainement renfermé dans une carcasse (16), sur laquelle ont été représentées une commande de réglage de vitesse (17) et la prise d'énergie électrique (18).

L'excentrique (7), située sur la prolongation du châssis (13), reçoit l'entrainement du moteur électrique, dont on n'a représenté que l'axe (15), dans ce cas, à travers des pignons (14) qui constitueront un ralentissement, indépendamment du possible réglage que l'on pourrait établir à l'aide de moyens électroniques.

Ainsi donc, dans toutes ses variantes, soit constiutant une unité de cuisiniére intégrale, soit placé sur une cuisiniére conventionnelle, soit constituant un outil portatif susceptible d'être placé sur un fourneau quelconque de la cuisiniére conventionnelle, le dispositif que l'on préconise ici est constitué d'excentriques (7), dont au moins une d'elles reçoit le couple de giration d'un moteur, et qui présentent dans la partie supérieure les points d'appui du support de la cuisiniére, et lequel, au pivotement des excentriques, décrit un mouvement de translation suivant une trajectoire circulaire.

On a représenté le moyen d'accouplement entre les excentriques (7) et le support (12) par un assemblage où le trou est présent dans l'excentrique (7), tandis que le pivot saillant se trouve dans le support; toutefois, il serait possible de faire la réalisation contraire, dans laquelle le pivot est placé dans l'excentrique (7), alors que le support possèderait, dans ce cas, un trou de passage.

Une fois décrite, et suffisamment, la nature de l'invention, ainsi que la forme de la réaliser, il ne nous reste qu'à ajouter le fait que, dans son ensmble et dans les parties l'intégrant, il est possible de procéder à des modifications de forme, matérielles et de disposition, à condition que ces modificatins ne fassent pas en sorte que les caractéristiques soient autres que celles de l'invention, et qui sont revendiquées ci-dessous:

## Revendications

1. Dispositif pour la coction de nourritures, lequel est composé d'une carcasse support (1) qui présente dans sa partie supérieure une plaque de chauffage électrique (5), protégée intérieurement par un isolant thermique (4), au-dessus duquel est monté un élément universel (12), support du récipient de cuisine, caractérisé parce que ce élément repose sur des pièces excentriques (7) tournant dans le même sens, imprimant au récipient un mouvement de translation suivant une trajectoire circulaire; l'une des pièces excentriques au moins reçoit l'entraînemet d'un moteur avec réducteur de vitesse (9), installé intérieurement dans ladite carcasse (1), alors que les autres pivotent librement dans des axes montés sur leurs roulements correspondants.

2. Dispositif pour la coction de nourritures qui emploie, en tant que plaque de chauffage, celle d'une cuisinière conventionnelle, caractérié parce que comprend un châssis annulaire (13) monté sur celle-là, lequel présente au moins deux pièces excentriques (7) équipées d'un axe de pivotement médian et d'un point d'appui supérieur décentré pour un support universel (12) de récipient de cuisine, lequel, en tournant celles-là, décrit un mouvement de translation suivant une trajectoire circulaire; une de ces pièces au moins présente un moyen d'accouplement avec un moteur monté dans une carcasse (16) annexe audit châssis, qui leur imprime un mouvement de rotation.

3. Dispositif, selon les revendications précédentes, caractérisé en ce que ces pièces excentriques (7) présentent dans leur face inférieure un axe de pivotement médian, et extérieurement un trou latéral (10) équipé d'une boule intérieure (11); alors que le support (12) présente des pivots saillants distribués régulièrement conformément à leurs respectives pièces excentriques (7), lesquelles s'encastrent dans les trous qu'elles possèdent.

4. Dispositif, selon les revendications 1 et 2, qui se caractérise en ce que ces pièces excentriques (7) présentent dans leur face inférieure un axe de pivotement médian étant extérieurement équipées d'un pivot latéral, conformément aux trous présents dans le support du récipient, régulièrement distribués selon leurs respectives pièces excentriques, les deux éléments s'encastrant entre eux par assemblage.

5. Dispositif, selon les revendications 1 et 2, qui se caractérise en ce que ces pièces excentriques (7) sont deux au moins, préféremment trois ou quatre.

6. Dispositif, selon la première revendication, caractérisé en ce que la plaque de chauffage est constituée d'une cuisinière conventionnelle dans laquelle se trouvent montées ces pièces excentriques (7), dont une au moins est équipée d'un moyen d'entraînement suivant un mouvement de rotation.

7. Dispositif, selon la revendication deuxième, caractérisé en ce que ces moyens d'accouplement sont des pignons (14) (15) assurant le ralentissement du moteur au niveau voulu, indépendamment du
réglage de la vitesse qui s'établira par des moyens électriques.

8. Dispositif, selon les revendecations 1 ou 6, caractérisé en ce qu'au moins une de ces pièces excentriques (7) présente dans sa partie inférieure une poule ou moyen assimilé d'accouplement d'un moteur installé hors du châssis de la même.

## Claims

1. A device for cooking food comprising a support casing (1) fitted with an upper electrical heating plate (5) internally protected by heat insulation (4), above which a support element (12) is installed which provides a supporting means for a cooker container, characterized in that said element rests on eccentric parts (7) which rotate in the same direction, imparting a translational, circular path movement to the container; at least one of said eccentric parts being driven by a motor and reducer (9) installed inside said casing (1), while the remaining parts rotate freely on axes mounted on bearings.

2. A device for cooking food using a heating plate which is the heating plate of a conventional cooker, comprising an annular chassis (13) located above said plate and having at least two eccentric parts (7) fitted with a central rotating axis and an upper off-center support point for a cooker container support element (12) which, by virtue of the rotation of said parts, is made to rotate in a translational, circular path movement; at least one of said parts having coupling means for attachment to a motor installed in a housing (16) adjacent to said chassis and which provides rotational movent.

3. A device according to any one of the above claims, characterized in that said eccentric parts (7) are provided on their lower face with a central rotation axis and an exterior side hole (10) fitted with an inner ball (11), while the support element (12) is fitted with protruding pivot pins evenly spaced according to respective eccentric parts (7) and which fit into holes provided in said parts.

4. A device according to any one of claims 1 and 2, characterized in that said eccentric parts (7) are provided on their lower face with a central rotation axis and on their external sides with pivot pins conforming with holes drilled in the container support element and evenly spaced according to respective eccentric parts (7), thus providing a mating fit for said pivot pins and holes.

5. A device according to any one of claims 1 and 2, characterized in that said eccentric parts (7) are at least two parts, although preferably three or four.

6. A device according to claim 1, characterized in that said heating plate is a conventional cooker heating plate on which said eccentric parts (7) have been installed, at least one of said parts being fitted with driving means providing rotational movement.

7. A device according to claim 2, characterized in that said coupling means are gear wheels (14) and (15) which ensure motor speed reduction down to the desired degree, irrespective of speed adjustments provided through electric means.

8. A device according to claims 1 or 6, characterized in that at least one of said eccentric parts (7) is fitted on its lower side with a pulley or similar means of coupling it to a motor located outside the chassis.

## Patentansprüche

1. Vorrichtung zum Kochen von Lebensmitteln, umfassend ein Haltegehäuse (1), das oben eine innen durch eine Wärmeschutzmasse (4) geschützte elektrische Heizplatte (5) aufweist, über der als Halterung des Kochbehälters ein Universal-Bauteil (12) angeordnet wird, dadurch gekennzeichnet, dass dieses Bauteil auf in gleicher Richtung drehenden Exzenterteilen (7) ruht, die dem Behälter eine Verschiebungsbewegung entlang einer kreisförmige Bahn auferlegen; wobei mindestens eines der genannten Exzenterteile durch einen im Inneren des gennanten Gehäuses (1) befindlichen Getriebemotor (9) angetrieben wird, während sich die anderen Teile frei auf an entspechenden Wälzlagern angebrachten Achsen drehen.

2. Vorrichtung zum Kochen von Lebensmitteln, bei dem als Heizplatte die eines herkömmlichen Herdes eingesetzt wird, und die ein auf dieser angebrachtes Ringgestell (13) umfasst, das mindestes zwei Exzenterteile (7) aufweist, die mit einer mittleren Drehachse und mit einem oberen aussermittigen Stützpunkt für einen Universal-Halter (12) des Kochbehälters ausgestattet sind, der beim Drehen derselben eine Verschiebungsbewegung über eine kreisförmige Bahn beschreibt, wobei mindestens eines dieser Teile ein Kupplungsmittel mit einem in einem an dem genannten Gestell angebrachten Gehäuse (16) befindlichen Motor aufweist, der ihm eine Drehbewegung auferlegt.

3. Vorrichtung nach einem der vorhergehenden Ansprüche, dadurch gekennzeichnet, dass die genannten Exzenterteile (7) an ihrer Unterseite eine mittlere Drehachse und aussen eine mit einer inneren Kugel (11) versehene seitliche Bohrung (10) aufweisen, während die Halterung (12) den entsprechenden Exzenterteilen gemäss regelmmässig verteilte, hervorstehende Zapfen aufweist, die in an diesen befindlichen Löchern einrasten.

4. Vorrichtung nach einem der Ansprüche 1 und 2, dadurch gekennzeichnet, dass die genannten Exzenterteile (7) an ihrer Innseite eine mittlere Drehachse aufweisen und aussen mit einem Seitenzapfen versehen sind, entsprechend an der Halterung des Behälters befindlicher Bohrungen, die den jeweiligen Exzenterteilen (7) gemäss regelmässig verteilt sind, wobei beide Bauteile miteinander verspundet sind.

5. Vorrichtung nach einem der Ansprüche 1 und 2, dadurch gekennzeichnet, dass mindestens zwei, vorzugsweise drei oder vier der genannten Exzenterteile (7) vorhanden sind.

6. Vorrichtung gemäss dem ersten Anspruch, dadurch gekennzeichnet, dass die genannte Heizplatte aus einem herkömmlichen Herd besteht, auf dem die genannten Exzenterteile (7) aufgebracht sind, von denen mindestens eines mit einem Antriebsmittel in Drehbewegung versehen ist.

7. Vorrichtung gemäss dem zweiten Anspruch, dadurch gekennzeichnet, dass die genannten Kupplungsmittel Ritzel (14) und (15) sind, welche die Geschwindigkeitsreduzierung des Motors in dem gewünschten Masse sicherstellen, unabhängig von der durch elektrische Mittel hergestellten Regulierung derselben.

8. Vorrichtung nach einem der Ansprüche 1 oder 6, dadurch gekennzeichnet, dass mindestens eines der genannten Exzenterteile (7) innen eine Scheibe oder ein ähnliches Kupplungsmittel eines ausserhalb des Gestells derselben befindlichen Motors aufweist.
